# EUROPEAN PATENT SPECIFICATION

(11) **EP 2 826 698 B1**
(45) Date of publication and mention of the grant of the patent: **19.08.2015**
(21) Application number: 13177169.3
(22) Date of filing: 19.07.2013
(51) Int. Cl.: B62J 1/08

(54) **Seat post device**
Sattelstützvorrichtung
Dispositif de tige de selle

(43) Date of publication of application: 21.01.2015
(73) Proprietor: MERIDA INDUSTRY CO., LTD., Meei Gaang Tsuen Ta Tsuen Chang Hwa Hsien (TW)
(72) Inventor: Falke, Jürgen, 71634 Ludwigsburg (DE); Lai, Jason, Changhua Hsien (TW)
(74) Representative: Pallini Gervasi, Diego

(56) References cited:
- DE-U1-202004 009 660
- DE-U1-202008 007 475
- FR-A1- 2 792 599
- US-A1- 2013 113 242

## Description

### 1. Field of the Invention

The present invention relates to a fitting for a bicycle, and more particularly to a seat post device that can be combined with a bicycle saddle for adjusting position of the bicycle saddle.

### 2. Description of Related Art

A conventional seat post is applied for being mounted at a standing position on a bicycle and comprises a saddle combining end. The saddle combining end is located at a top end of the seat post. The seat post is combined with a bicycle saddle by the saddle combining end.

Generally, a horizontal distance between a handlebar and the bicycle saddle is adjustable for fitting with different users. When a user sits on the bicycle saddle, the user can self-adjust his/her riding position on the bicycle saddle either frontward or rearward relative to the bicycle saddle to maintain the riding comfort. However, the bicycle saddle is combined with the saddle combining end of the seat post, and the saddle combining end is directly formed instead of being detachably assembled on the seat post, so the position of the bicycle saddle relative to the seat post cannot be adjusted. Accordingly, even though the user can self-adjust the riding position on the bicycle saddle, the conventional seat post is still unsuitable for different users of different heights since the horizontal distance between the handlebar and the bicycle saddle is fixed.

Furthermore, with reference to US patent application publication NO.2013/0113242, a conventional seat clamp assembly has a body, two lower members and two upper members. The lower members are respectively disposed on two opposite sides of the body. The upper members respectively abut the lower members, wherein a mating contact is formed between each upper member and the corresponding lower member. The upper members and the lower members are applied for vertical clamping of two rails of a seat to attach the seat to a seat post. Two washers respectively abut the upper members. A fastening system is inserted through and fixes the lower members, the upper members and the washers on the body. The fastening system can be tightened or loosened with one hand. Therefore, the seat clamp assembly can provide a fine tuning of a front to back angular tilt as preferred by a user.

With reference to FR patent NO. 2792599, an adjusting seat clamp device has a body and two clamping units. The body is combined with a seat post. The clamping units are respectively adjustably mounted on two opposite sides of the body and are applied for clamping two rails of a seat.

The main objective of the present invention is to provide a seat post device to solve the aforementioned problem. The seat post device according to claim 1 comprises a seat post body and a seat post connector.

The seat post body is elongated and comprises a cross section being non-circular, a windward side, a leeward side, a left side, a right side, and a combining end defined as a top end of the seat post body. The combining end comprises a top surface and two combining holes formed at an interval in the combining end from the top surface of the combining end.

The seat post connector is combined with and selectively turned relative to the combining end, and comprises a top side, a bottom side abutting the combining end, a first side, and a second side. The first side and the second side of the seat post connector correspond in position to the right side and the left side of the seat post body respectively. The seat post connector further comprises a first end and a second end, wherein the first end and the second end correspond in position to the windward side and the leeward side of the seat post body respectively. The seat post connector further comprises two seat post holes formed through the seat post connector from the top side to the bottom side of the seat post connector and aligning with the combining holes respectively, two bolts inserted into the seat post holes and then into the combining holes, a saddle fixing hole being rounded and formed through the seat post connector from the first side to the second side of the seat post connector, and a saddle adjusting hole being curved and formed through the seat post connector from the first side to the second side of the seat post connector.

Advantageous embodiments of the invention are defined in the dependent claims 2-10.

Other objectives, advantages and novel features of the present invention will become more apparent from the following detailed description when taken in conjunction with the accompanying drawings.

### IN THE DRAWINGS

Fig. 1 is a perspective view of a preferred embodiment of a seat post device in accordance with the present invention;
Fig. 2 is an exploded perspective view of the seat post device in Fig. 1;
Fig. 3 is a partially enlarged side view in partial section of the seat post device in Fig. 1;
Fig. 4 is a partially enlarged side view in partial section of the seat post device in Fig. 1;
Fig. 5 is a partially operational side view of the seat post device in Fig. 1;
Fig. 6 shows an assembly process of the seat post device in Fig. 1;
Fig. 7 shows another assembly process of the seat post device in Fig. 1; and
Fig. 8 is an operational top view of the seat post device in Fig. 1.

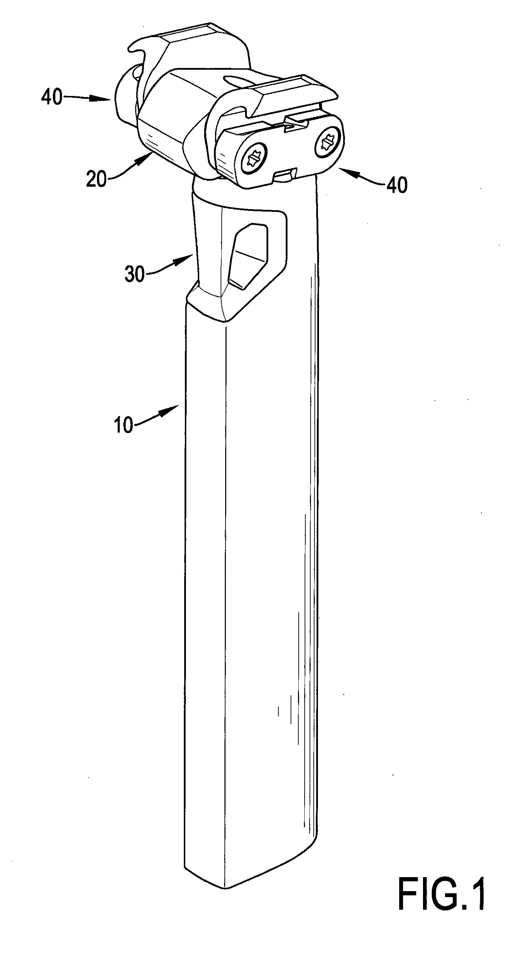

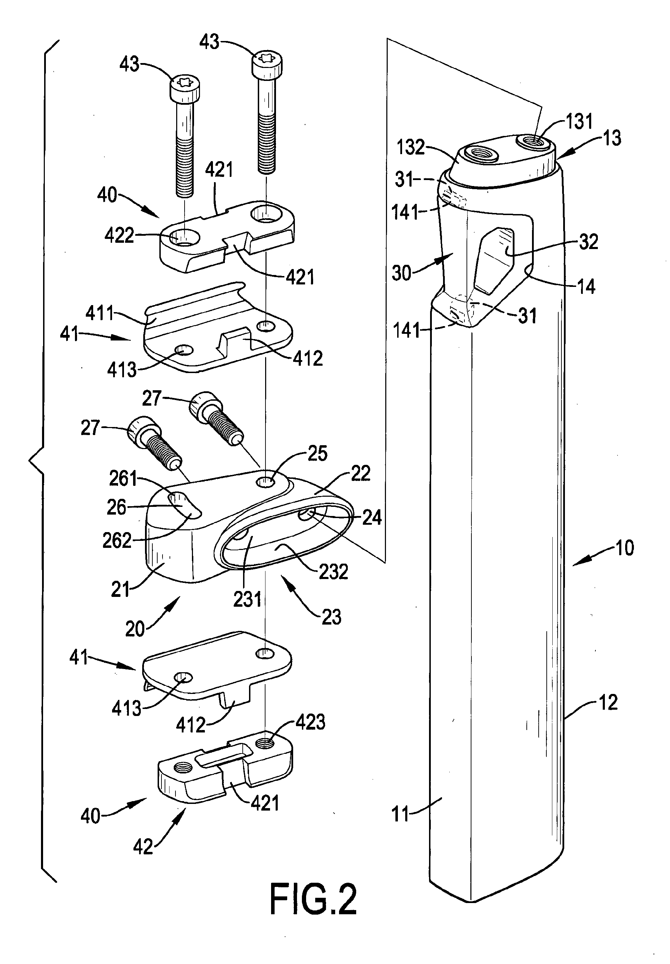

With reference to Figs. 1 to 3, a preferred embodiment of a seat post device in accordance with the present invention comprises a seat post body 10, a seat post connector 20, a shockproof cushion 30 and a clamping device 40.

The seat post body 10 is elongated and comprises a cross section, a windward side 11, a leeward side 12, a left side, a right side, a combining end 13 and a shockproof trough 14. The cross section of the seat post body 10 is non-circular. The windward side 11 and the leeward side 12 are defined as a front side and a rear side of the seat post body 10 respectively. The combining end 13 is defined as a top end of the seat post body 10. The combining end 13 is inclined downwardly from the windward side 11 toward the leeward side 12 and comprises two combining holes 131 concaved at an interval from a top surface of the combining end 13. Preferably, the combining end 13 has a protruding block and an abutting surface 132 circularly formed on and around the protruding block. The shockproof trough 14 is disposed below the combining end 13. The shockproof trough 14 is defined in the seat post body 10 from the windward side 11 to the leeward side 12 and is formed through the seat post body 10 from the right side to the left side of the seat post body 10. The shockproof trough 14 comprises two concaved holes 141 defined in a top surface and a bottom surface of the shockproof trough 14 respectively.

The seat post connector 20 is combined with the combining end 13 in two selective opposite directions and is applied to combine with a bicycle saddle. The seat post connector 20 comprises a top side, a bottom side, a first side, a second side, a first end 21, a second end 22, an abutting trough 23, two seat post holes 24, a saddle fixing hole 25 and a saddle adjusting hole 26. When the seat post connector 20 is combined with the combining end 13, the first side and the second side of the seat post connector 20 correspond in position to the right side and the left side of the seat post body 10 respectively, and the first end 21 and the second end 22 correspond in position to the windward side 11 and the leeward side 12 of the seat post body 10 respectively. The first end 21 has a pointed middle portion extending toward the top side and the bottom side of the seat post connector 20. The second end 22 has a pointed middle portion extending toward the first side and the second side of the seat post connector 20.

The abutting trough 23 is formed in the bottom side of the seat post connector 20 and comprises a bottom surface 231 and a peripheral surface 232. The bottom surface 231 of the abutting trough 23 abuts the top surface of the combining end 13. The peripheral surface 232 abuts around the abutting surface 132 of the combining end 13. Therefore, the combining end 13 is covered by the abutting trough 23, such that the combination between the seat post connector 20 and the seat post body 10 is firm. The seat post holes 24 are formed through the seat post connector 20 from the top side to the bottom side of the seat post connector 20 and align with the combining holes 131 respectively. Two bolts 27 are inserted into the seat post holes 24 and then into the combining holes 131, such that the seat post connector 20 is combined with the combining end 13 of the seat post body 10.

The saddle fixing hole 25 and the saddle adjusting hole 26 are formed through the seat post connector 20 from the first side and the second side of the seat post connector 20. The saddle fixing hole 25 is round and comprises a center. The saddle adjusting hole 26 is curved, is adjacent to the first end 21 of the seat post connector 20 and comprises a top end 261 and a bottom end 262. A first datum line L 1 is defined as a connection between the center of the saddle fixing hole 25 and the top end of the saddle adjusting hole 26. A second datum line L2 is defined as a connection between the center of the saddle fixing hole 25 and the bottom end of the saddle adjusting hole 26. A maximum adjusting angle A is defined as an angle between the first datum line L1 and the second datum line L2. Preferably, the maximum adjusting angle A is 30 degrees. A user can adjust the inclined angle of the bicycle saddle within the scope of the maximum adjusting angle A according to the demand of the user.

The shockproof cushion 30 is elastic to provide a shockproof effect in a longitudinal direction and is mounted in the shockproof trough 14. The shockproof cushion 30 may be made of rubber or silicone. The shockproof cushion 30 matches the shockproof trough 14 and comprises two positioning portions 31 and a cushion hole 32. The positioning portions 31 are formed on the shockproof cushion 30 and protrude from a top surface and a bottom surface of the shockproof cushion 30 respectively, and the positioning portions 31 each respectively engage the concaved holes 141. The cushion hole 32 is formed through the shockproof cushion 30 from a right side to a left side of the shockproof cushion 30.

The clamping device 40 is mounted on the seat post connector 20 and is applied for clamping a bicycle saddle. The clamping device 40 comprises two clamping bases 41, two clamping units 42 and two locking units 43. The clamping bases 41 abut the first side and the second side of the seat post connector 20 respectively. Each clamping base 41 comprises a base trough 411, a clamping block 412 and two base holes 413, wherein the base trough 411 is curved in cross section and is formed from a top side of the clamping base 41. The clamping block 412 protrudes from a bottom side of the clamping base 41 and is located at a middle of the bottom side of the clamping base 41. The base holes 413 are formed through the clamping base 41 and align with the saddle fixing hole 25 and the saddle adjusting hole 26 respectively.

The clamping units 42 each respectively and detachably abut the clamping bases 41 . Each clamping unit 42 is located between the base trough 411 and the clamping block 412 of a corresponding one of the clamping bases 41. The clamping units 42 are I-shaped and each clamping unit 42 comprises two clamping troughs 421 defined in a top surface and a bottom surface of the clamping unit 42 respectively, wherein one of the clamping troughs 421 engages the clamping block 412 of a corresponding one of the clamping bases 41, and a depth of one of the clamping troughs 421 is deeper than a depth of the other clamping trough 421. One of the clamping units 42 comprises two openings 422 formed through the clamping unit 42 and aligning with the base holes 413; the other clamping unit 42 comprises two threaded holes 423 formed through the clamping unit 42 and also aligning with the base holes 413.

The locking units 43 are combined with the clamping bases 41 and the clamping units 42. The locking units 43 are inserted into the openings 422 and the base holes 413, are inserted into the saddle fixing hole 25 and the saddle adjusting hole 26 respectively, and are inserted into the threaded holes 423, such that the clamping units 42 can be fixed on the two sides of the clamping bases 41.

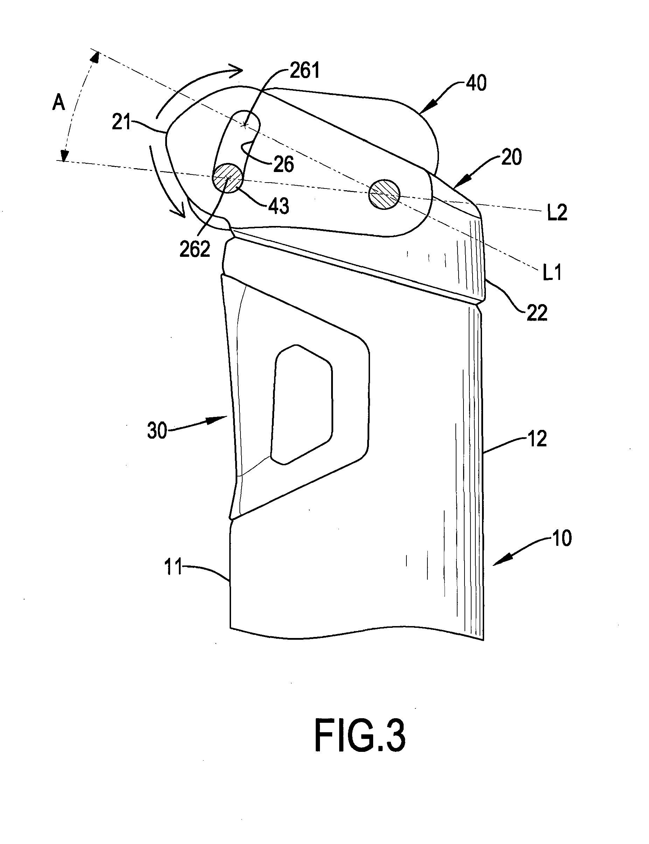

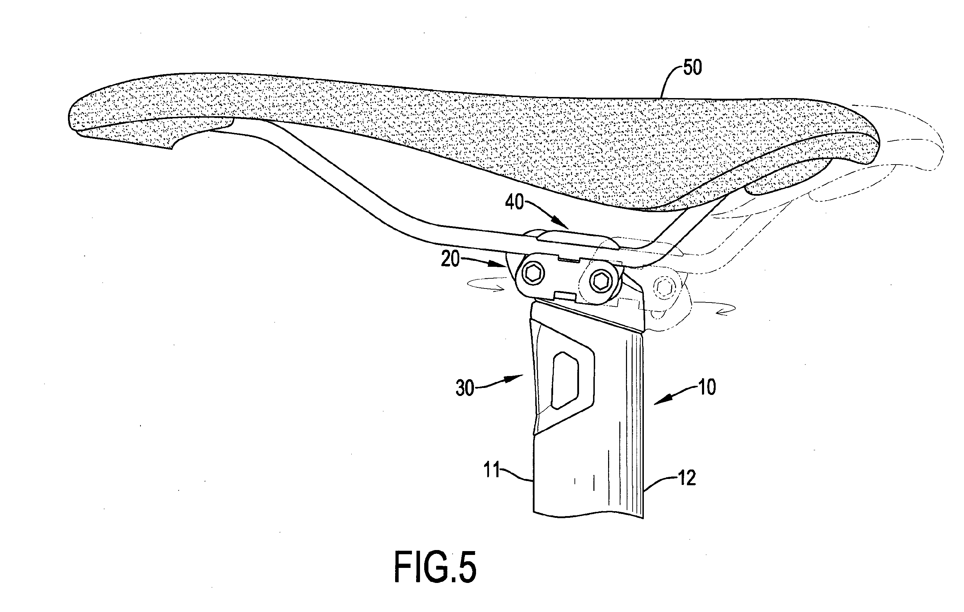

With reference to Figs. 3 to 5, in use, a bicycle saddle 50 is mounted on the seat post device by the clamping device 40. A user sits on the bicycle saddle 50 and determines whether to adjust the position of the bicycle saddle 50 relative to the seat post device or not. When the first end 21 of the seat post connector 20 corresponds in position to the windward side 11 of the seat post body 10, the bicycle saddle 50 mounted on the seat post device is located at a front position relative to the seat post device. Alternatively, when the second end 22 of the seat post connector 20 corresponds in position to the windward side 11 of the seat post body 10, the bicycle saddle 50 mounted on the seat post device is located at a rear position relative to the seat post device. Comparing the bicycle saddle 50 located at a front position with the bicycle saddle 50 located at a rear position, the former is closer to a handlebar of the bike than the latter, such that the bicycle saddle 50 located at the front position is suitable for the user who has a short height and the bicycle saddle 50 located at the rear position is suitable for the user who has a high height. Therefore, the user can decide the mounting direction of the seat post connector 20 relative to the seat post body 10 according to the demand of the user to achieve a preferred distance between the bicycle saddle 50 and the handlebar. The inclined angle of the bicycle saddle 50 can be adjusted by adjusting the position of the locking unit 43 relative to the saddle adjusting hole 26. Preferably, the inclined angle of the bicycle saddle 50 can be adjusted within 30 degrees.

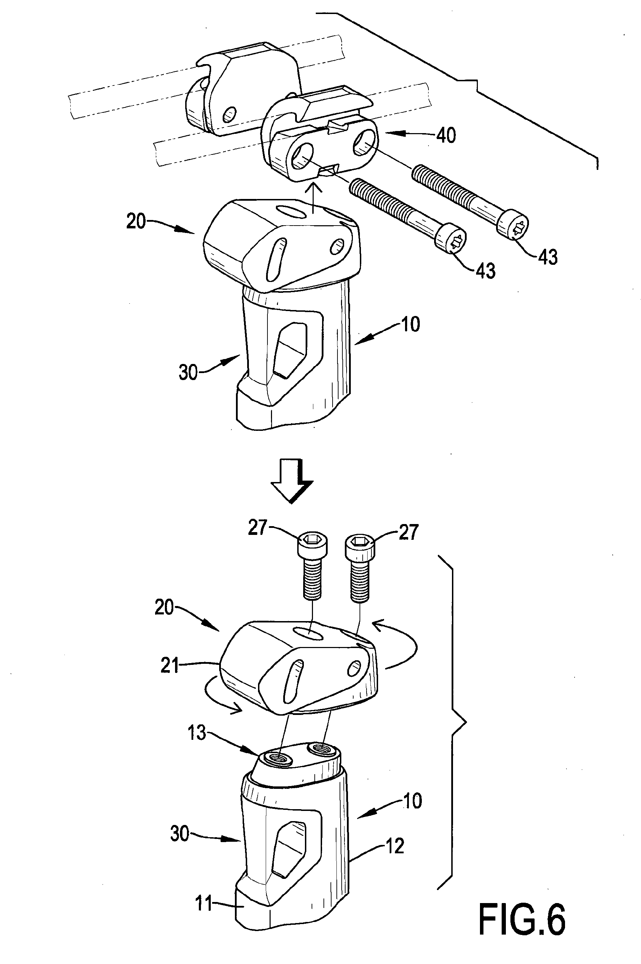

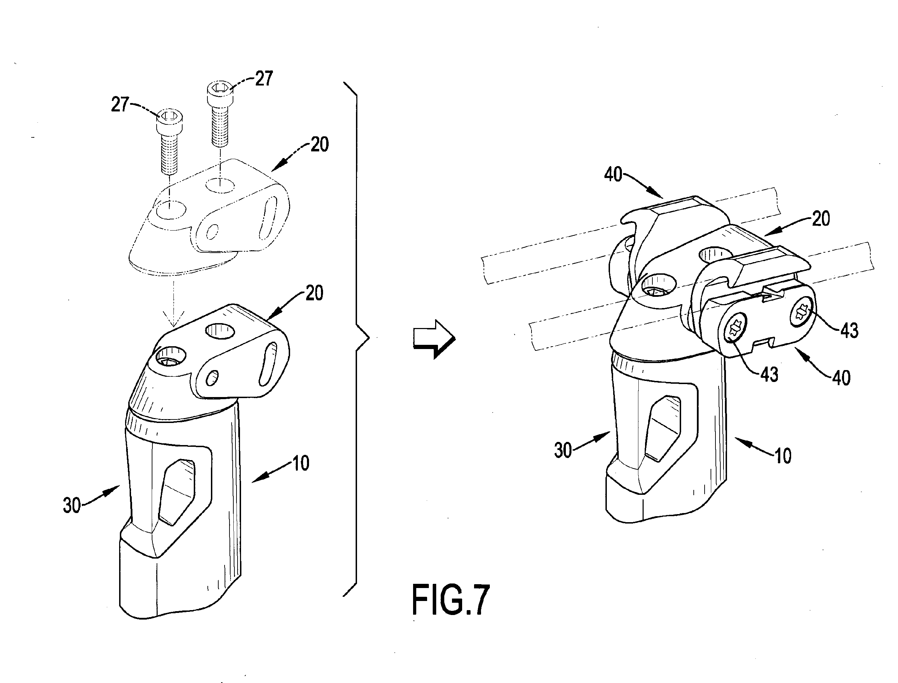

With reference to Figs. 6 and 7, when the seat post connector 20 is mounted on the seat post body 10 in the opposite direction, the locking units 43 are loosened first. Then, the bicycle saddle 50 and the clamping device 40 are detached from the seat post connector 20. The seat post connector 20 can be detached from the combining end 13 of the seat post body 10 after the bolts 27 are also loosened. The seat post connector 20 is turned 180 degrees relative to the original position of the seat post connector 20, such that the first end 21 of the seat post connector 20 corresponds in position to the leeward side 12 of the seat post body 10. After the seat post connector 20 is positioned on the seat post body 10, the bolts 27 are mounted in the seat post connector 20 and the seat post body 10 again to fix the seat post connector 20 relative to the seat post body 10. Then, the clamping device 40 is mounted on the seat post connector 20 again by the locking units 43, and the bicycle saddle is fixed on the clamping device 40.

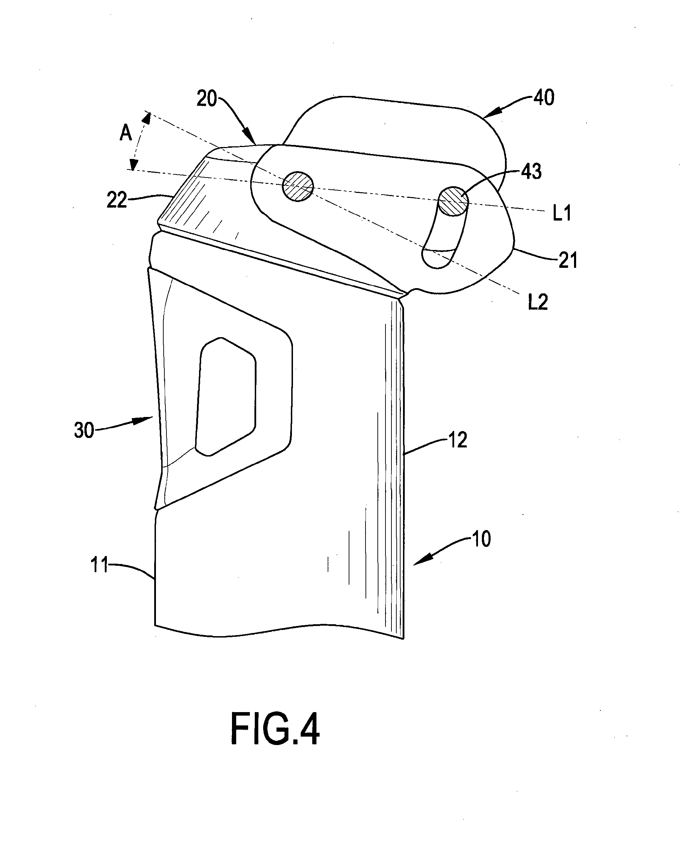

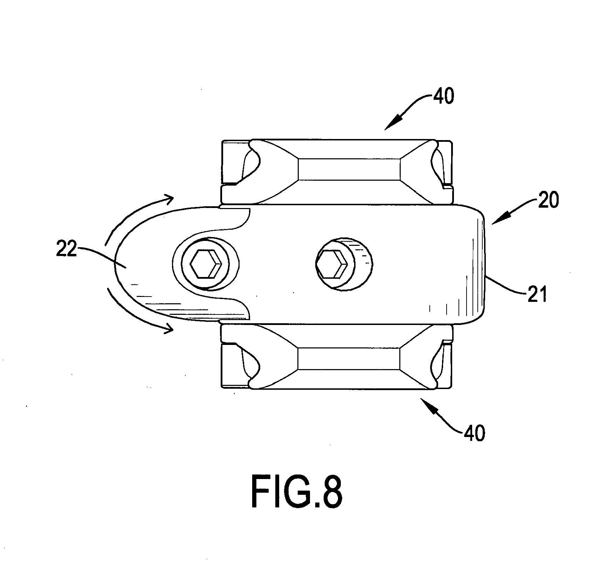

With reference to Fig. 3, when the first end 21 of the seat post connector 20 corresponds to the windward side 11 of the seat post body 10, the wind blowing toward the first end 21 is guided toward the top side and the bottom side of the seat post connector 20 since the first end 21 has a pointed middle portion, and drag or resistance generated from the wind can hence be reduced. With reference to Figs. 4 and 8, when the second end 22 of the seat post connector 20 corresponds to the windward side 11 of the seat post body 10, the wind blowing toward the second end 22 is guided toward the first side and the second side of the seat post connector 20 since the second end 22 has a pointed middle portion, and drag or resistance generated from the wind also can hence be reduced.

The shockproof trough 14 provides the elasticity in longitudinal direction for the seat post body 10, such that the shock generated during riding the bike can be decreased. The shockproof cushion 30 can further enhance the shockproof effect. The two clamping troughs 421 of any one of the clamping units 42 have different depths, such that the clamping device 40 can clamp the seat tubes of different bicycle saddles 50 that have different diameters. In use, the locking units 43 are loosened to remove the clamping units 42 from the clamping base 41. Any one of the clamping troughs 421 of different depths selectively faces upward, depending on the demand of the user. The clamping units 42 are mounted on the clamping base 41 again by the locking units 43 to complete the re-assembly.

## Claims

1. A seat post device, the seat post device having an elongated seat post body (10) and a seat post connector (20) mounted on the seat post body (10), **characterized in that**:
the seat post body (10) comprises
a cross section being non-circular;
a windward side (11);
a leeward side (12);
a left side;
a right side; and
a combining end (13) defined as a top end of the seat post body (10) and comprising
a top surface; and
two combining holes (131) formed at an interval in the combining end (13) from the top surface of the combining end (13); and
the seat post connector (20) is combined with and selectively turned relative to the combining end (13), and comprises
a top side;
a bottom side abutting the combining end (13);
a first side;
a second side, wherein the first side and the second side of the seat post connector (20) correspond in position to the right side and the left side of the seat post body (10) respectively;
a first end (21);
a second end (22), wherein the first end (21) and the second end (22) correspond in position to the windward side (11) and the leeward side (12) respectively;
two seat post holes (24) formed through the seat post connector (20) from the top side to the bottom side of the seat post connector (20) and aligning with the combining holes (131) respectively;
two bolts (27) inserted into the seat post holes (24) and then into the combining holes (131) such that the seat post connector (20) is combined with the combining end (13);
a saddle fixing hole (25) being rounded and formed through the seat post connector (20) from the first side to the second side of the seat post connector (20); and
a saddle adjusting hole (26) being curved and formed through the seat post connector (20) from the first side to the second side of the seat post connector (20).

2. The seat post device as claimed in claim 1, wherein
the combining end (13) is formed as a protruding block and further comprises an abutting surface (132) circularly formed on and around the protruding block; and
the seat post connector (20) further comprises an abutting trough (23) concaved in the seat post connector (20) from the bottom side of the seat post connector (20) and covering the combining end (13), wherein the abutting trough (23) comprises
a bottom surface (231) abutting the top surface of the combining end (13); and
a peripheral surface (232) abutting around the abutting surface (132) of the combining end (13).

3. The seat post device as claimed in claim 2, wherein the first end (21) has a pointed middle portion extending toward the top side and the bottom side of the seat post connector (20).

4. The seat post device as claimed in any one of claims 1 to 3,
wherein the second end (22) has a pointed middle portion extending toward the first side and the second side of the seat post connector (20).

5. The seat post device as claimed in any one of claims 1 to 3, wherein
a first datum line (L1) is defined as a connection between a center of the saddle fixing hole (25) and a top end of the saddle adjusting hole (26);
a second datum line (L2) is defined as a connection between the center of the saddle fixing hole (25) and a bottom end of the saddle adjusting hole (26); and
a maximum adjusting angle (A) is defined as an angle between the first datum line (L1) and the second datum line (L2), wherein the maximum adjusting angle (A) is 30 degrees.

6. The seat post device as claimed in claim 4, wherein
a first datum line (L1) is defined as a connection between a center of the saddle fixing hole (25) and a top end of the saddle adjusting hole (26);
a second datum line (L2) is defined as a connection between the center of the saddle fixing hole (25) and a bottom end of the saddle adjusting hole (26); and
a maximum adjusting angle (A) is defined as an angle between the first datum line (L1) and the second datum line (L2), wherein the maximum adjusting angle (A) is 30 degrees.

7. The seat post device as claimed in claim 6, wherein
the seat post device further comprises a shockproof trough (14) disposed below the combining end (13), concaved in the seat post body (10) from the windward side (11) to the leeward side (12) of the seat post body (10), and formed through the seat post body (10) from the right side to the left side of the seat post body (10); and
a shockproof cushion (30) being elastic, mounted in and matching the shockproof trough (14).

8. The seat post device as claimed in claim 7, wherein
the shockproof trough (14) comprises two concaved holes (141) concaved in a top surface and a bottom surface of the shockproof trough (14) respectively; and
the shockproof cushion (30) comprises
two positioning portions (31) formed on the shockproof cushion (30), protruding from a top surface and a bottom surface of the shockproof cushion (30) respectively and each respectively engaging the concaved holes (141); and
a cushion hole (32) formed through the shockproof cushion (30) from a right side to a left side of the shockproof cushion (30).

9. The seat post device as claimed in claim 6, wherein the seat post device comprises
a clamping device (40) mounted on the seat post connector (20) and comprising
two clamping bases (41) abutting the first side and the second side of the seat post connector (20) respectively, wherein each clamping base (41) comprises
a base trough (411) being curved and formed from a top side of the clamping base (41);
a clamping block (412) protruding from a bottom side of the clamping base (41) and located at a middle of the bottom side of the clamping base (41); and
two base holes (413) formed through the clamping base (41) and aligning with the saddle fixing hole (25) and the saddle adjusting hole (26) respectively;
two clamping units (42) each respectively and detachably abutting the clamping bases (41), wherein each clamping unit (42) is located between the base trough (411) and the clamping block (412) of a corresponding one of the clamping bases (41), and comprises two clamping troughs (421), wherein
the clamping troughs (421) are concaved from a top surface and a bottom surface of the clamping unit (42) respectively;
one of the clamping troughs (421) engages the clamping block (412) of a corresponding one of the clamping bases (41);
a depth of one of the clamping troughs (421) is deeper than a depth of the other clamping trough (421); and
one of the clamping units (42) comprises two openings (422) formed through the clamping unit (42) and aligning with the base holes (413), and the other clamping unit (42) comprises two threaded holes (423) formed through the clamping unit (42) and aligning with the base holes (413); and
two locking units (43) combined with the clamping bases (41) and the clamping units (42), wherein the locking units (43) are inserted into the openings (422) and the base holes (413), are inserted into the saddle fixing hole (25) and the saddle adjusting hole (26) respectively, and are inserted into the threaded holes (423) such that the clamping units (42) can be fixed on the clamping bases (41).

10. The seat post device as claimed in claim 8, wherein the seat post device comprises
a clamping device (40) mounted on the seat post connector (20) and comprising
two clamping bases (41) abutting the first side and the second side of the seat post connector (20) respectively, wherein each clamping base (41) comprises
a base trough (411) being curved and formed from a top side of the clamping base (41);
a clamping block (412) protruding from a bottom side of the clamping base (41) and located at a middle of the bottom side of the clamping base (41); and
two base holes (413) formed through the clamping base (41) and aligning with the saddle fixing hole (25) and the saddle adjusting hole (26) respectively;
two clamping units (42) each respectively and detachably abutting the clamping bases (41), wherein each clamping unit (42) is located between the base trough (411) and the clamping block (412) of a corresponding one of the clamping bases (41), and comprises two clamping troughs (421), wherein
the clamping troughs (421) are concaved from a top surface and a bottom surface of the clamping unit (42) respectively;
one of the clamping troughs (421) engages the clamping block (412) of a corresponding one of the clamping bases (41);
a depth of one of the clamping troughs (421) is deeper than a depth of the other clamping trough (421); and
one of the clamping units (42) comprises two openings (422) formed through the clamping unit (42) and aligning with the base holes (413), and the other clamping unit (42) comprises two threaded holes (423) formed through the clamping unit (42) and also aligning with the base holes (413); and
two locking units (43) combined with the clamping bases (41) and the clamping units (42), wherein the locking units (43) are inserted into the openings (422) and the base holes (413), are inserted into the saddle fixing hole (25) and the saddle adjusting hole (26) respectively, and are inserted into the threaded holes (423) such that the clamping units (42) can be fixed on the clamping bases (41).

## Patentansprüche

1. Sattelstützenvorrichtung, wobei die Sattelstützenvorrichtung einen langgestreckten Sattelstützenkörper (10) und einen an dem Sattelstützenkörper (10) angebrachten Sattelstützenverbinder (20) aufweist, **dadurch gekennzeichnet, dass**:
der Sattelstützenkörper (10) umfasst:
einen Querschnitt, der nicht kreisförmig ist;
eine Luvseite (11);
eine Leeseite (12);
eine linke Seite;
eine rechte Seite; und
ein Verbindungsende (13), das als ein oberes Ende des Sattelstützenkörpers (10) definiert ist und das Folgendes umfasst:
eine obere Oberfläche; und
zwei Verbindungslöcher (131), die in einem Abstand von der oberen Oberfläche des Verbindungsendes (13) in dem Verbindungsende (13) gebildet sind; und
der Sattelstützenverbinder (20) mit dem Verbindungsende (13) verbunden ist und wahlweise relativ zu ihm gedreht wird und umfasst:
eine Oberseite;
eine Unterseite, die an das Verbindungsende (13) angrenzt;
eine erste Seite;
eine zweite Seite, wobei die erste Seite und die zweite Seite des Sattelstützenverbinders (20) bezüglich der Lage der rechten Seite bzw. der linken Seite des Sattelstützenkörpers (10) entsprechen;
ein erstes Ende (21);
ein zweites Ende (22), wobei das erste Ende (21) und das zweite Ende (22) bezüglich der Lage der Luvseite (11) bzw. der Leeseite (12) entsprechen;
zwei Sattelstützenlöcher (24), die von der Oberseite zu der Unterseite des Sattelstützenverbinders (20) durch den Sattelstützenverbinder (20) gebildet sind und die jeweils auf die Verbindungslöcher (131) ausgerichtet sind;
zwei Schrauben (27), die in der Weise in die Sattelstützenlöcher (24) und daraufhin in die Verbindungslöcher (131) eingeführt sind, dass der Sattelstützenverbinder (20) mit dem Verbindungsende (13) verbunden ist;
ein Sattelbefestigungsloch (25), das abgerundet und von der ersten Seite zu der zweiten Seite des Sattelstützenverbinders (20) durch den Sattelstützenverbinder (20) gebildet ist; und
ein Satteleinstellloch (26), das gekrümmt ist und das von der ersten Seite zu der zweiten Seite des Sattelstützenverbinders (20) durch den Sattelstützenverbinder (20) gebildet ist.

2. Sattelstützenvorrichtung gemäß Anspruch 1, wobei
das Verbindungsende (13) als ein vorstehender Block gebildet ist und ferner eine angrenzende Oberfläche (132) umfasst, die an dem und um den vorstehenden Block kreisförmig gebildet ist; und
der Sattelstützenverbinder (20) ferner eine angrenzende Mulde (23) umfasst, die von der Unterseite des Sattelstützenverbinders (20) in dem Sattelstützenverbinder (20) ausgehöhlt ist und die das Verbindungsende (13) bedeckt, wobei die angrenzende Mulde (23) umfasst:
eine untere Oberfläche (231), die an die obere Oberfläche des Verbindungsendes (13) angrenzt; und
eine Umfangsoberfläche (232), die um die angrenzende Oberfläche (132) des Verbindungsendes (13) angrenzt.

3. Sattelstützenvorrichtung gemäß Anspruch 2, wobei das erste Ende (21) einen zugespitzten Mittelabschnitt aufweist, der in Richtung der Oberseite und der Unterseite des Sattelstützenverbinders (20) verläuft.

4. Sattelstützenvorrichtung gemäß einem der Ansprüche 1 bis 3, wobei das zweite Ende (22) einen zugespitzten Mittelabschnitt aufweist, der in Richtung der ersten Seite und der zweiten Seite des Sattelstützenverbinders (20) verläuft.

5. Sattelstützenvorrichtung gemäß einem der Ansprüche 1 bis 3, wobei
eine erste Bezugslinie (L1) als eine Verbindung zwischen einer Mitte des Sattelbefestigungslochs (25) und einem oberen Ende des Satteleinstelllochs (26) definiert ist;
ein zweite Bezugslinie (L2) als eine Verbindung zwischen der Mitte des Sattelbefestigungslochs (25) und einem unteren Ende des Satteleinstelllochs (26) definiert ist; und
ein maximaler Einstellwinkel (A) als ein Winkel zwischen der ersten Bezugslinie (L1) und der zweiten Bezugslinie (L2) definiert ist, wobei der maximale Einstellwinkel (A) 30 Grad beträgt.

6. Sattelstützenvorrichtung gemäß Anspruch 4, wobei
eine erste Bezugslinie (L1) als eine Verbindung zwischen einer Mitte des Sattelbefestigungslochs (25) und einem oberen Ende des Satteleinstelllochs (26) definiert ist;
eine zweite Bezugslinie (L2) als eine Verbindung zwischen der Mitte des Sattelbefestigungslochs (25) und einem unteren Ende des Satteleinstelllochs (26) definiert ist; und
ein maximaler Einstellwinkel (A) als ein Winkel zwischen der ersten Bezugslinie (L1) und der zweiten Bezugslinie (L2) definiert ist, wobei der maximale Einstellwinkel (A) 30 Grad beträgt.

7. Sattelstützenvorrichtung gemäß Anspruch 6, wobei
die Sattelstützenvorrichtung ferner eine unter dem Verbindungsende (13) angeordnete stoßfeste Mulde (14) umfasst, die in dem Sattelstützenkörper (10) von der Luvseite (11) zu der Leeseite (12) des Sattelstützenkörpers (10) ausgehöhlt ist und die von der rechten Seite zu der linken Seite des Sattelstützenkörpers (10) durch den Sattelstützenkörper (10) gebildet ist; und
einen stoßfesten Puffer (30), der elastisch ist, der in der stoßfesten Mulde (14) angebracht ist und zu ihr passt.

8. Sattelstützenvorrichtung gemäß Anspruch 7, wobei
die stoßfeste Mulde (14) zwei ausgehöhlte Löcher (141) umfasst, die in einer oberen Oberfläche bzw. in einer unteren Oberfläche der stoßfesten Mulde (14) ausgehöhlt sind; und
der stoßfeste Puffer (30) umfasst:
zwei an dem stoßfesten Puffer (30) gebildete Positionierabschnitte (31), die von einer oberen Oberfläche bzw. von einer unteren Oberfläche des stoßfesten Puffers (30) vorstehen und die jeweils mit den ausgehöhlten Löchern (141) in Eingriff sind; und
ein Pufferloch (32), das von einer rechten Seite zu einer linken Seite des stoßfesten Puffers (30) durch den stoßfesten Puffer (30) gebildet ist.

9. Sattelstützenvorrichtung gemäß Anspruch 6, wobei die Sattelstützenvorrichtung umfasst:
eine Klemmvorrichtung (40), die an dem Sattelstützenverbinder (20) angebracht ist und die umfasst:
zwei Klemmsockel (41), die an die erste Seite bzw. an die zweite Seite des Sattelstützenverbinders (20) angrenzen, wobei jeder Klemmsockel (41) umfasst:
eine Sockelmulde (411), die gekrümmt ist und die von einer Oberseite des Klemmsockels (41) gebildet ist;
einen Klemmblock (412), der von einer Unterseite des Klemmsockels (41) vorsteht und der sich in einer Mitte der Unterseite des Klemmsockels (41) befindet; und
zwei Sockellöcher (413), die durch den Klemmsockel (41) gebildet sind und die auf das Sattelbefestigungsloch (25) bzw. auf das Satteleinstellloch (26) ausgerichtet sind;
zwei Klemmeinheiten (42), die jeweils lösbar an die Klemmsockel (41) angrenzen, wobei sich jede Klemmeinheit (42) zwischen der Sockelmulde (411) und dem Klemmblock (412) eines entsprechenden der Klemmsockel (41) befindet und zwei Klemmmulden (421) umfasst, wobei
die Klemmmulden (421) von einer oberen Oberfläche bzw. von einer unteren Oberfläche der Klemmeinheit (42) ausgehöhlt sind;
eine der Klemmmulden (421) mit dem Klemmblock (412) eines entsprechenden der Klemmsockel (41) in Eingriff ist;
eine Tiefe einer der Klemmmulden (421) größer als eine Tiefe der anderen Klemmmulde (421) ist; und
eine der Klemmeinheiten (42) zwei Öffnungen (422) umfasst, die durch die Klemmeinheit (42) gebildet sind und die auf die Sockellöcher (413) ausgerichtet sind, und die andere Klemmeinheit (42) zwei Gewindelöcher (423) umfasst, die durch die Klemmeinheit (42) gebildet sind und die auf die Sockellöcher (413) ausgerichtet sind; und
zwei Arretiereinheiten (43), die mit den Klemmsockeln (41) und mit den Klemmeinheiten (42) verbunden sind, wobei die Arretiereinheiten (43) in die Öffnungen (422) und in die Sockellöcher (413) eingeführt sind, in das Sattelbefestigungsloch (25) bzw. in das Satteleinstellloch (26) eingeführt sind und in die Gewindelöcher (423) eingeführt sind, sodass die Klemmeinheiten (42) an den Klemmsockeln (41) befestigt werden können.

10. Sattelstützenvorrichtung gemäß Anspruch 8, wobei die Sattelstützenvorrichtung umfasst:
eine Klemmvorrichtung (40), die an dem Sattelstützenverbinder (20) angebracht ist und die umfasst:
zwei Klemmsockel (41), die an die erste Seite bzw. an die zweite Seite des Sattelstützenverbinders (20) angrenzen, wobei jeder Klemmsockel (41) umfasst:
eine Sockelmulde (411), die gekrümmt ist und die von einer Oberseite des Klemmsockels (41) gebildet ist;
einen Klemmblock (412), der von einer Unterseite des Klemmsockels (41) vorsteht und der sich in einer Mitte der Unterseite des Klemmsockels (41) befindet; und
zwei Sockellöcher (413), die durch den Klemmsockel (41) gebildet sind und die auf das Sattelbefestigungsloch (25) bzw. auf das Satteleinstellloch (26) ausgerichtet sind;
zwei Klemmeinheiten (42), die jeweils lösbar an die Klemmsockel (41) angrenzen, wobei sich jede Klemmeinheit (42) zwischen der Sockelmulde (411) und dem Klemmblock (412) eines entsprechenden der Klemmsockel (41) befindet und zwei Klemmmulden (421) umfasst, wobei
die Klemmmulden (421) von einer oberen Oberfläche bzw. von einer unteren Oberfläche der Klemmeinheit (42) ausgehöhlt sind;
eine der Klemmmulden (421) mit dem Klemmblock (412) eines entsprechenden der Klemmsockel (41) in Eingriff ist;
eine Tiefe einer der Klemmmulden (421) größer als eine Tiefe der anderen Klemmmulde (421) ist; und
eine der Klemmeinheiten (42) zwei Öffnungen (422) umfasst, die durch die Klemmeinheit (42) gebildet sind und die auf die Sockellöcher (413) ausgerichtet sind und die andere Klemmeinheit (42) zwei Gewindelöcher (423) umfasst, die durch die Klemmeinheit (42) gebildet sind und die ebenfalls auf die Sockellöcher (413) ausgerichtet sind; und
zwei Arretiereinheiten (43), die mit den Klemmsockeln (41) und mit den Klemmeinheiten (42) verbunden sind, wobei die Arretiereinheiten (43) in die Öffnungen (422) und in die Sockellöcher (413) eingeführt sind, in das Sattelbefestigungsloch (25) bzw. in das Satteleinstellloch (26) eingeführt sind und in die Gewindelöcher (423) eingeführt sind, sodass die Klemmeinheiten (42) an den Klemmsockeln (41) befestigt sind.

## Revendications

1. Dispositif de tige de selle, le dispositif de tige de selle comprenant un corps de tige de selle allongé (10) et un connecteur de tige de selle (20) monté sur le corps de tige de selle (10), **caractérisé en ce que** :
le corps de tige de selle (10) comprend
une section transversale qui n'est pas circulaire ;
un côté au vent (11);
un côté sous le vent (12) ;
un côté gauche ;
un côté droit ; et
une extrémité de combinaison (13) définie comme une extrémité supérieure du corps de tige de selle (10) et comprenant
une surface supérieure ; et
deux trous de combinaison (131) formés à un intervalle dans l'extrémité de combinaison (13) à partir de la surface supérieure de l'extrémité de combinaison (13) ; et comprend le connecteur de tige de selle (20) est combiné avec et tourné de manière sélective par rapport à l'extrémité de combinaison (13), et comprend
un côté supérieur ;
un côté inférieur jouxtant l'extrémité de combinaison (13) ;
un premier côté ;
un deuxième côté, dans lequel le premier côté et le deuxième côté du connecteur de tige de selle (20) correspondent en position respectivement au côté droit et au côté gauche du corps de tige de selle (10) ;
une première extrémité (21) ;
une deuxième extrémité (22), dans lequel la première extrémité (21) et la deuxième extrémité (22) correspondent en position respectivement au côté au vent (11) et au côté sous le vent (12) ;
deux trous de tige de selle (24) formés à travers le connecteur de tige de selle (20) du côté supérieur au côté inférieur du connecteur de tige de selle (20) et s'alignant respectivement avec les trous de combinaison (131) ;
deux boulons (27) insérés dans les trous de tige de selle (24) et ensuite dans les trous de combinaison (131) de manière que le connecteur de tige de selle (20) soit combiné avec l'extrémité de combinaison (13) ;
un trou de fixation de selle (25) qui est arrondi et formé à travers le connecteur de tige de selle (20) du premier côté au deuxième côté du connecteur de tige de selle (20) ; et
un trou de réglage de selle (26) qui est incurvé et formé à travers le connecteur de tige de selle (20) du premier côté au deuxième côté du connecteur de tige de selle (20).

2. Dispositif de tige de selle selon la revendication 1, dans lequel
l'extrémité de combinaison (13) est formé comme un bloc en saillie et comprend en outre une surface d'about (132) formée circulairement sur et autour du bloc en saillie ; et
le connecteur de tige de selle (20) comprend en outre un évidement d'about (23) concave dans le connecteur de tige de selle (20) du côté inférieur du connecteur de tige de selle (20) et couvrant l'extrémité de combinaison (13), dans lequel l'évidement d'about (23) comprend
une surface inférieure (231) jouxtant la surface supérieure de l'extrémité de combinaison (13) ; et
une surface périphérique (232) en butée autour de la surface d'about (132) de l'extrémité de combinaison (13).

3. Dispositif de tige de selle selon la revendication 2, dans lequel la première extrémité (21) comporte une portion centrale pointue s'étendant vers le côté supérieur et le côté inférieur du connecteur de tige de selle (20).

4. Dispositif de tige de selle selon l'une quelconque des revendications 1 à 3, dans lequel la deuxième extrémité (22) comporte une portion centrale pointue s'étendant vers le premier côté et le deuxième côté du connecteur de tige de selle (20).

5. Dispositif de tige de selle selon l'une quelconque des revendications 1 à 3, dans lequel
une première ligne de référence (L1) est définie comme une connexion entre un centre du trou de fixation de selle (25) et une extrémité supérieure du trou de réglage de selle (26) ; une deuxième ligne de référence (L2) est définie comme une connexion entre le centre du trou de fixation de selle (25) et une extrémité inférieure du trou de réglage de selle (26) ; et
un angle de réglage maximal (A) est défini comme un angle entre la première ligne de référence (L1) et la deuxième ligne de référence (L2), dans lequel l'angle de réglage maximal (A) est de 30 degrés.

6. Dispositif de tige de selle selon la revendication 4, dans lequel
une première ligne de référence (L1) est définie comme une connexion entre un centre du trou de fixation de selle (25) et une extrémité supérieure du trou de réglage de selle (26) ; une deuxième ligne de référence (L2) est définie comme une connexion entre le center du trou de fixation de selle (25) et une extrémité inférieure du trou de réglage de selle (26) ; et
un angle de réglage maximal (A) est défini comme un angle entre la première ligne de référence (L1) et la deuxième ligne de référence (L2), dans lequel l'angle de réglage maximal (A) est de 30 degrés.

7. Dispositif de tige de selle selon la revendication 6, dans lequel
le dispositif de tige de selle comprend en outre un évidement antichoc (14) disposé au-dessous de l'extrémité de combinaison (13), concave dans le corps de tige de selle (10) du côté au vent (11) au côté sous le vent (12) du corps de tige de selle (10), et formé à travers le corps de tige de selle (10) du côté droit au côté gauche du corps de tige de selle (10) ; et
un coussinet antichoc (30) qui est élastique, monté dans et correspondant à l'évidement antichoc (14).

8. Dispositif de tige de selle selon la revendication 7, dans lequel
l'évidement antichoc (14) comprend deux trous concaves (141) ménagés respectivement dans une surface supérieure et une surface inférieure de l'évidement antichoc (14) ; et
le coussinet antichoc (30) comprend
deux portions de positionnement (31) formées sur le coussinet antichoc (30), faisant saillie respectivement d'une surface supérieure et d'une surface inférieure du coussinet antichoc (30) et chacune engageant respectivement les trous concaves (141) ; et
un trou de coussinet (32) formé à travers the coussinet antichoc (30) d'un côté droit à un côté gauche du coussinet antichoc (30).

9. Dispositif de tige de selle selon la revendication 6, dans lequel le dispositif de tige de selle comprend
un dispositif de serrage (40) monté sur le connecteur de tige de selle (20) et comprenant deux bases de serrage (41) jouxtant respectivement le premier côté et le deuxième côté du connecteur de tige de selle (20), dans lequel chaque base de serrage (41) comprend un évidement de base (411) qui est incurvé et formé à partir d'un côté supérieur de la base de serrage (41) ;
un bloc de serrage (412) faisant saillie à partir d'un côté inférieur de la base de serrage (41) et situé au milieu du côté inférieur de la base de serrage (41) ; et
deux trous de base (413) formé à travers la base de serrage (41) et s'alignant respectivement avec le trou de fixation de selle (25) et le trou de réglage de selle (26) ;
deux unités de serrage (42) jouxtant chacune respectivement et de manière amovible les bases de serrage (41), dans lequel chaque unité de serrage (42) est située entre l'évidement de base (411) et le bloc de serrage (412) de l'une correspondante des bases de serrage (41), et comprend deux évidements de serrage (421), dans lequel
les évidements de serrage (421) sont concaves respectivement à partir d'une surface supérieure et d'une surface inférieure de l'unité de serrage (42) ;
un des évidements de serrage (421) engage le bloc de serrage (412) de l'une correspondante des bases de serrage (41) ;
une profondeur de l'un des évidements de serrage (421) est plus profonde qu'une profondeur de l'autre évidement de serrage (421) ; et
une des unités de serrage (42) comprend deux ouvertures (422) formées à travers l'unité de serrage (42) et s'alignant avec les trous de base (413), et l'autre unité de serrage (42) comprend deux trous filetés (423) formés à travers l'unité de serrage (42) et s'alignant avec les trous de base (413) ; et
deux unités de verrouillage (43) combinées avec les bases de serrage (41) et les unités de serrage (42), dans lequel les unités de verrouillage (43) sont insérées dans les ouvertures (422) et les trous de base (413), sont insérées respectivement dans le trou de fixation de selle (25) et le trou de réglage de selle (26), et sont insérées dans les trous filetés (423) de manière que les unités de serrage (42) puissent être fixées sur les bases de serrage (41).

10. Dispositif de tige de selle selon la revendication 8, dans lequel dispositif de tige de selle comprend
un dispositif de serrage (40) monté sur le connecteur de tige de selle (20) et comprenant deux bases de serrage (41) jouxtant respectivement le premier côté et le deuxième côté du connecteur de tige de selle (20), dans lequel chaque base de serrage (41) comprend un évidement de base (411) qui est incurvé et formé à partir d'un côté supérieur de la base de serrage (41) ;
un bloc de serrage (412) faisant saillie à partir d'un côté inférieur de la base de serrage (41) et situé au milieu du côté inférieur de la base de serrage (41) ; et
deux trous de base (413) formé à travers la base de serrage (41) et s'alignant respectivement avec le trou de fixation de selle (25) et le trou de réglage de selle (26) ;
deux unités de serrage (42) jouxtant chacune respectivement et de manière amovible les bases de serrage (41), dans lequel chaque unité de serrage (42) est située entre l'évidement de base (411) et le bloc de serrage (412) de l'une correspondante des bases de serrage (41), et comprend deux évidements de serrage (421), dans lequel
les évidements de serrage (421) sont concaves respectivement à partir d'une surface supérieure et d'une surface inférieure de l'unité de serrage (42) ;
un des évidements de serrage (421) engage le bloc de serrage (412) de l'une correspondante des bases de serrage (41) ;
une profondeur de l'un des évidements de serrage (421) est plus profonde qu'une profondeur de l'autre évidement de serrage (421) ; et
une des unités de serrage (42) comprend deux ouvertures (422) formé à travers l'unité de serrage (42) et s'alignant avec les trous de base (413), et l'autre unité de serrage (42) comprend deux trous filetés (423) formé à travers l'unité de serrage (42) et s'alignant également avec les trous de base (413) ; et
deux unités de verrouillage (43) combinées avec les bases de serrage (41) et les unités de serrage (42), dans lequel les unités de verrouillage (43) sont insérées dans les ouvertures (422) et les trous de base (413), sont insérées respectivement dans le trou de fixation de selle (25) et le trou de réglage de selle (26), et sont insérées dans les trous filetés (423) de manière que les unités de serrage (42) puissent être fixées sur les bases de serrage (41).
